# EUROPEAN PATENT SPECIFICATION

(11) **EP 4 515 584 B1**
(45) Date of publication and mention of the grant of the patent: **15.04.2026**
(21) Application number: 22726045.2
(22) Date of filing: 27.04.2022
(51) Int. Cl.: H01H 39/00, H02J 7/00

(54) **AN ENERGY STORAGE SYSTEM**
ENERGIESPEICHERSYSTEM
SYSTÈME DE STOCKAGE D'ÉNERGIE

(43) Date of publication of application: 05.03.2025
(73) Proprietor: Hitachi Energy Ltd, 8050 Zürich (CH)
(72) Inventor: BAI, Haofeng, 723 48 Västerås (SE); ZHANG, Zichi, 723 58 Västerås (SE); SÖDERBLOM, Anton, 749 43 Enköping (SE); NOISETTE, Philippe, 1228 Plan-les-Ouates (CH); MENG, Lexuan, 722 12 Västerås (SE)
(74) Representative: AWA Sweden AB
(86) International application number: PCT/EP2022/061212
(87) International publication number: WO 2023/208336

(56) References cited:
- DE-A1- 102014 206 270
- US-A1- 2016 114 695
- US-A1- 2019 283 626

## Description

### TECHNICAL FIELD

The present invention generally relates to energy storage systems and to energy storage units thereof.

### BACKGROUND

Energy storage systems (ESSs) are systems for storing electrical energy in bulk. The energy storage system is typically connected, or connectable, to an energy distribution grid for delivering power to the grid when demanded.

The energy storage system typically comprises energy storage units, which are series-connected to a voltage level of up to tens of kilo-volt or even more, in medium voltage (MV) or high voltage (HV) systems. A common voltage rating of the energy storage (ES) unit as such is within low voltage (LV) range. In order to meet power and/or energy requirements, commonly the ES units are also connected in parallel. The series and parallel connected ES units form the ESS.

To protect the ES units from safety related events, e.g. thermal runaway, or overvoltage, disconnecting the ES unit from the rest of the ESS is required. For the ESS operating at considerable voltage levels, for instance in an MV system, such disconnection is not trivial since voltage stress could occur. Typical mechanical switches used today are bulky and costly in order to be applicable for the high voltage and current. US 2016/114695 A1, DE 102014206270 A1, and US 2019/283626 A1 show examples of prior art ES units.

### SUMMARY

In view of the foreoing, a concern of the present invention is to reduce the bulkiness and structural complexity of the prior art switches.

To address at least this concern, an energy storage unit and a method in accordance with the independent claims are provided. Preferred embodiments are defined by the dependent claims.

According to a first aspect of the present invention, there is provided an energy storage unit comprising a first unit terminal and a second unit terminal, an energy storage element having a first element terminal and a second element terminal, wherein the second element terminal is connected with the second unit terminal, and a protection circuit comprising a first pyrotechnic switch connected between the first unit terminal and the first element terminal and a second pyrotechnic switch connected between the first unit terminal and the second unit terminal. Thereby, a more compact switch solution has been obtained.

The first pyrotechnic switch has a primary state where it is closed and a secondary state where it is open, and the second pyrotechnic switch has a primary state where it is open and a secondary state where it is closed. Thereby, in the first state the energy storage element is connected to the first and second unit terminals and in the second state the energy storage element is disconnected from the first unit terminal and the second pyrotechnic switch is connected to the first and second unit terminals, thereby bypassing the energy storage element.

The energy storage unit comprises a control unit connected with the first and second pyrotechnic switches, wherein the control unit is arranged to switch the first and second pyrotechnic switches from the primary states to the secondary states.

The control unit may be arranged to perform the switching with an adjustable time delay between the switchings.

According to a the present invention there is provided an energy storage system comprising several energy storage units according to above, where the energy storage units are connected in series.

The energy storage system may comprise several energy storage groups connected in parallel, wherein each energy storage group comprises several series connected energy storage units.

The energy storage system may be connected to an AC/DC converter, which, in turn, is connected to an energy distribution grid.

According to an aspect of the invention there is provided a method of controlling an energy storage unit having a first unit terminal a second unit terminal, the method comprising:
- providing the energy storage unit with an energy storage element having a first element terminal and a second element terminal, and a protection circuit comprising a first pyrotechnic switch and a second pyrotechnic switch;
- connecting the second element terminal with the second unit terminal;
- connecting the first pyrotechnic switch between the first unit terminal and the first element terminal;
- connecting the second pyrotechnic switch between the first unit terminal and the second unit terminal; and
- controlling switching of the first and second pyrotechnic switches.

The first pyrotechnical switch has a primary state where it is closed, and the second pyrotechnic switch has a primary state where it is open. Then, said controlling switching of the first and second switches comprises
- controlling the second pyrotechnic switch to change state to a secondary state where it is closed; and
after a time delay, controlling the first switch to change state to a secondary state where it is open. As an alternative, the switching sequence may be the opposite, i.e. switching the first pyrotechnic switch to the secondary state and then, after an adjustable time delay, switching the second pyrotechnic switch to the secondary state. The time delay is adjustable.

### BRIEF DESCRIPTION OF THE DRAWINGS

Exemplifying embodiments of the present invention will be described below with reference to the accompanying drawings.
Figure 1 is a schematic view of an energy storage system according to an embodiment of the present invention.

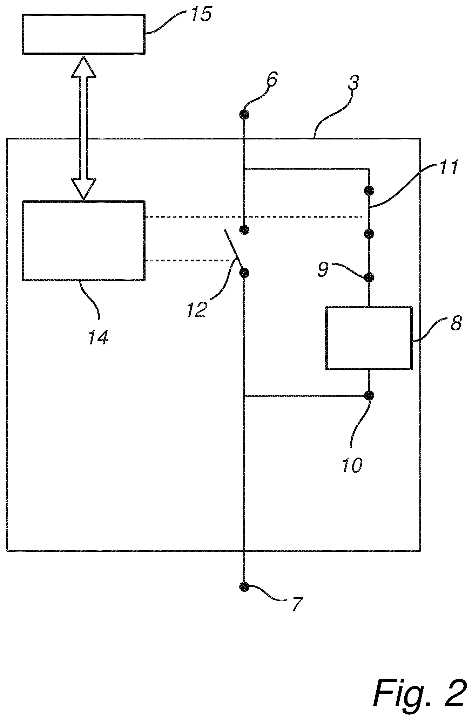

Figure 2 is a schematic view of a part of the system shown in figure 1.
Figure 3 is a flowchart of a method according to an embodiment of the present invention.

### DETAILED DESCRIPTION

The present invention will be described hereinafter with reference to the accompanying drawings, in which exemplifying embodiments of the present invention are shown.

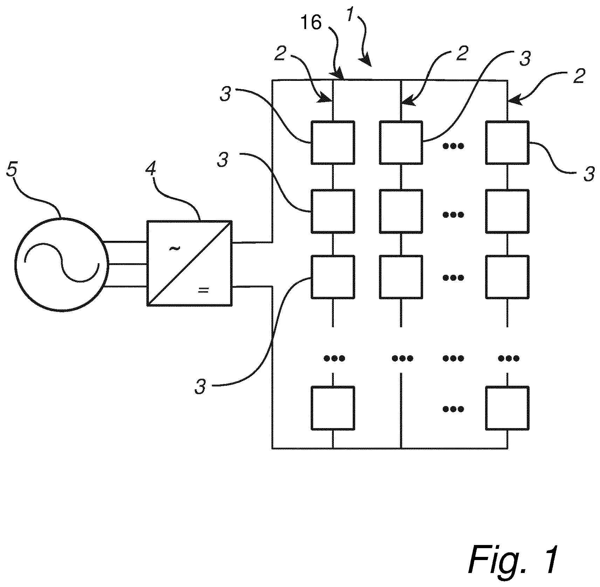

Figure 1 is a schematic view of an ESS according to an embodiment of the present invention. The ESS 1 may be connected or connectable via, for example, an AC/DC converter 4 to the grid 5. The ESS 1 comprises several energy storage units (ESU) 3 connected in series, according to an embodiment of the present invention. The series connected ESUs 3 may be referred to as forming an ESU group 2. The ESS 1 may comprise two or more ESU groups 2 connected in parallel. The ESU groups 2 are all connected to a DC link 16. The DC side of the AC/DC converter 4 is connected to the DC link 16 as well.

Each ESU 3 comprises a first unit terminal 6, a second unit terminal 7, and an energy storage element (ESE) 8. Each of the first and second unit terminals 6, 7 may be connected in series with another ESU 3 or with the DC link 16 depending on where in the ESU 2 group the ESU 3 is located. The ESE 8 comprises a first element terminal 9 and a second element terminal 10. The second element terminal 10 is connected with the second unit terminal 7. An output voltage of the ESU 3, i.e. the voltage between the first and second unit terminals 6, 7 may be within LV range or within MV range. An output of the ESS 1 is considerably high, above 1.5 kV.

The ESU further comprises a protection circuit, which comprises a first pyrotechnic switch 11 connected between the first unit terminal 6 and the first element terminal 9, and a second pyrotechnic switch 12 connected between the first unit terminal 6 and the second unit terminal 7. The first pyrotechnic switch 11 may have a primary state where it is closed and a secondary state where it is open, and the second pyrotechnic switch 12 may have a primary state where it is open and a secondary state where it is closed. In other words, during normal operation the first pyrotechnic switch 11 is closed while the second pyrotechnic switch 12 is open.

As understood by the person skilled in the art a pyrotechnic switch is a switch, which utilizes a pyrotechnic charge to open or close the contacts inside the switch. The pyrotechnic charge stores the energy for opening or closing operation in form of chemical compound and releases the energy with an electric triggering signal. As contrast, a type of switch conventionally used in the present environment contains electromagnetic switches that open or close the contacts with energy from the electromagnetic element, such as a coil. Since the energy density and power density of the pyrotechnic charge is much higher than that of an electromagnetic element, a pyrotechnic switch has a significantly smaller volume and a good current making capacity. However, the pyrotechnic charge is an element that can be used only once, and therefore the pyrotechnic switch has to be replaced after being switched. For an energy storage system fault, one-time operation is acceptable for some severe and non-repeating system faults. Therefore, the pyrotechnic switch is advantageous for energy storage system protection.

Therefore, the first and second pyrotechnic switches 11, 12 provide advantages of reducing the cost and the physical volume of the ESU 3 in comparison with prior art solutions.

The energy storage unit 3 further comprises a control unit 14 connected with the first and second pyrotechnic switches 11, 12, wherein the control unit 14 is arranged to control the states of the first and second pyrotechnic switches 11, 12. More particularly, in order to switch the first and second pyrotechnic switches 11, 12 from the primary state to the secondary state, the control unit 14 triggers the pyrotechnic actuator within each of the first and second pyrotechnic switches 11, 12. The control unit 14 may be arranged internally of the ESU 3, and the control unit 14, in turn, may be connected to an external controller 15, either by wire or wireless.

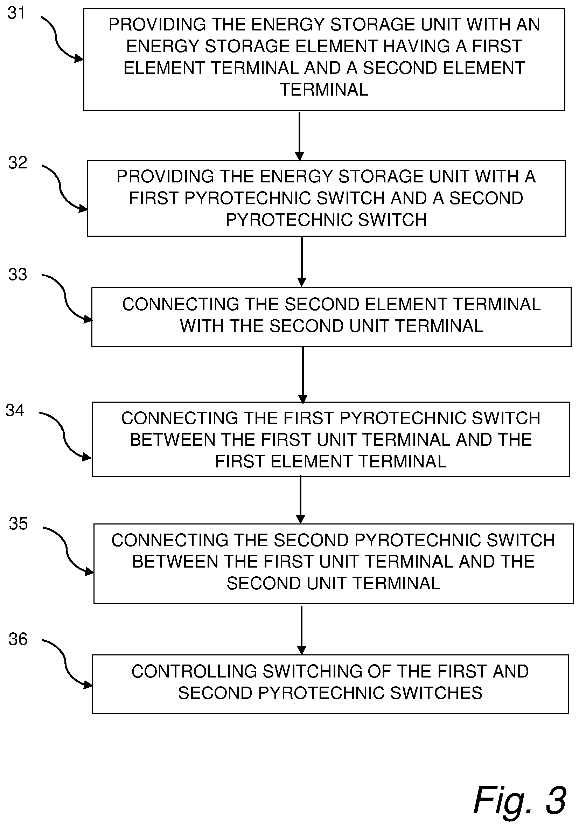

Referring to Fig. 3, an embodiment of a method of controlling the ESU 3 comprises the following operations. Initially, in box 31, the ESU 3 is arranged by providing it with the ESE 8 having the first and second element terminals 9, 10, and, in box 32, by providing the ESE 8 with the protection circuit comprising the first pyrotechnic switch 11 and the second pyrotechnic switch 12. Assuming that the energy storage system 1 is connected to the grid 5 and feeds the grid with energy, the pyrotechnic switches of the ESU 3 are in their primary states. This means that the ESE 8 delivers power via its element terminals 9, 10 and through the first pyrotechnic switch 11 to the unit terminals 6, 7 of the ESU 3. The method further comprises connecting the second element terminal 10 with the second unit terminal 7, box 33; connecting the first pyrotechnic switch 11 between the first unit terminal 6 and the first element terminal 9, box 34; and connecting the second pyrotechnic switch 12 between the first unit terminal 6 and the second unit terminal 7, box 35. Furthermore, in box 36, the method comprises controlling switching of the first and second pyrotechnic switches 11, 12.

When a need for disconnecting the ESE 8 occurs the control unit 14 first switches the second pyrotechnic switch 12 to the secondary state, i.e. the control unit 14 closes the second pyrotechnic switch 12. Thereby, the ESE 8 becomes bypassed by the obtained direct connection between the first and second unit terminals 6, 7 through the second pyrotechnic switch 12. Then, after a short time delay, the control unit 14 switches the first pyrotechnical switch 11 to its secondary state, i.e. the control unit 14 opens the first pyrotechnic switch 11. Thereby, the ESE 8 becomes finally disconnected from the first and second unit terminals 6, 7, and, consequently, from the ESS 1 as a whole. This bypassing/disconnection of an ESE 8 may be desirable for different reasons, such as, for example, short circuit failures, overvoltage, overtemperature, aging, etc.

The operation of the control unit 14 to perform the switching of the first and second pyrotechnical switches 11, 12 may, in turn, be controlled by control signals sent to the control unit 14 from the external controller 15. The time delay between closing the second pyrotechnic switch 12 and opening the first pyrotechnic switch 11 is adjustable. For example, the time delay may be in the order of 1-10 ms. However, other suitable time delays may be used as well. The time delay may be set by the control unit 14. The adjustment of the time delay may be done by an operator providing input to the control unit 14, directly or via the external controller 15.

As an alternative, which may be used in some applications, the order of the switching of the first and second pyrotechnic switches 11, 12 will be the opposite of the above-described order. This means that first the control unit 14 will switch the first pyrotechnical switch 11 to the open state, and then, after a time delay, the control unit 14 will switch the second pyrotechnical switch 12 to the closed state.

In addition, the control unit 14 may monitor the status of the pyrotechnic switches 11, 12 and send information about their status to the external controller 15.

When the first and second pyrotechnic switches have been switched to the secondary state, the AC/DC converter may perform a control of the voltage on the DC link to either keep the same DC voltage or reduce the DC voltage.

## Claims

1. An energy storage system connectable to an energy distribution grid, the energy storage system (1) comprising several energy storage units (3) connected in series, an energy storage unit of the several energy storage units comprising a first unit terminal (6) and a second unit terminal (7), an energy storage element (8) having a first element terminal (9) and a second element terminal (10), wherein the second element terminal is connected with the second unit terminal, and a protection circuit comprising a first pyrotechnic switch (11) connected between the first unit terminal and the first element terminal and a second pyrotechnic switch (12) connected between the first unit terminal and the second unit terminal, wherein the energy storage system is configured for providing an output voltage of above 1.5 kV, wherein the first pyrotechnic switch has a primary state where it is closed and a secondary state where it is open, wherein the second pyrotechnic switch has a primary state where it is open and a secondary state where it is closed, wherein the energy storage unit comprises a control unit (14) connected with the first and second pyrotechnic switches, wherein the control unit is arranged to switch the first and second pyrotechnic switches from the primary states to the secondary states, and wherein the control unit is arranged to control switching the second pyrotechnic switch to a secondary state where it is closed and, after an adjustable time delay, switching the first switch to a secondary state where it is open, or vice versa.

2. The energy storage system according to claim 1, comprising several energy storage groups (2) connected in parallel, wherein each energy storage group comprises several series connected energy storage units (3).

3. The energy storage system according to claim 1 or 2, wherein the energy storage system (1) is connected to an AC/DC converter (4), which, in turn, is connected to the energy distribution grid (5).

4. A method of controlling an energy storage system (1) connectable to an energy distribution grid (5), wherein the energy storage system is configured for providing an output voltage of above 1.5 kV, and wherein the energy storage system comprises several energy storage units (3) connected in series, an energy storage unit of the several energy storage units having a first unit terminal (6) and a second unit terminal (7), the method comprising:
providing said energy storage unit with an energy storage element (8) having a first element terminal (9) and a second element terminal (10), and a protection circuit comprising a first pyrotechnic switch (11) and a second pyrotechnic switch (12);
connecting the second element terminal with the second unit terminal;
connecting the first pyrotechnic switch between the first unit terminal and the first element terminal;
connecting the second pyrotechnic switch between the first unit terminal and the second unit terminal;
wherein the first pyrotechnical switch has a primary state where it is closed, and
wherein the second pyrotechnic switch has a primary state where it is open; and
controlling switching of the first and second pyrotechnic switches, comprising switching the second pyrotechnic switch to a secondary state where it is closed and, after an adjustable time delay, switching the first switch to a secondary state where it is open, or vice versa.

## Patentansprüche

1. Energiespeichersystem, das mit einem Energieverteilungsnetz verbindbar ist, wobei das Energiespeichersystem (1) mehrere in Reihe geschaltete Energiespeichereinheiten (3) umfasst, wobei eine Energiespeichereinheit der mehreren Energiespeichereinheiten einen ersten Anschluss (6) und einen zweiten Anschluss (7) umfasst, wobei ein Energiespeicherelement (8) einen ersten Elementanschluss (9) und einen zweiten Elementanschluss (10) aufweist, wobei der zweite Elementanschluss mit dem zweiten Einheitsanschluss verbunden ist, und eine Schutzschaltung, die einen ersten pyrotechnischen Schalter (11), der zwischen dem ersten Einheitsanschluss und dem ersten Elementanschluss verbunden ist, und einen zweiten pyrotechnischen Schalter (12) umfasst, der zwischen dem ersten Einheitsanschluss und dem zweiten Einheitsanschluss verbunden ist, wobei das Energiespeichersystem so ausgebildet ist, dass es eine Ausgangsspannung von oberhalb von 1,5 kV bereitstellt, wobei der erste pyrotechnische Schalter einen Primärzustand, in dem er geschlossen ist, und einen Sekundärzustand, in dem er offen ist, aufweist, wobei der zweite pyrotechnische Schalter einen Primärzustand, in dem er offen ist, und einen Sekundärzustand, in dem er geschlossen ist, aufweist, wobei die Energiespeichereinheit eine Steuereinheit (14) umfasst, die mit dem ersten und dem zweiten pyrotechnischen Schalter verbunden ist, wobei die Steuereinheit so angeordnet ist, dass sie den ersten und den zweiten pyrotechnischen Schalter aus dem Primärzustand in den Sekundärzustand umschaltet, und wobei die Steuereinheit so angeordnet ist, dass sie das Umschalten des zweiten pyrotechnischen Schalters in einen Sekundärzustand, in dem er geschlossen ist, und nach einer angepassten Zeitverzögerung das Umschalten des ersten Schalters in einen Sekundärzustand, in dem er offen ist, steuert. oder umgekehrt.

2. Energiespeichersystem nach Anspruch 1, das mehrere parallel geschaltete Energiespeichergruppen (2) umfasst, wobei jede Energiespeichergruppe mehrere in Reihe geschaltete Energiespeichereinheiten (3) umfasst.

3. Energiespeichersystem nach Anspruch 1 oder 2, wobei das Energiespeichersystem (1) mit einem AC/DC-Umrichter (4) verbunden ist, der wiederum mit dem Energieverteilungsnetz (5) verbunden ist.

4. Verfahren zum Steuern eines Energiespeichersystems (1), das mit einem Energieverteilungsnetz (5) verbindbar ist, wobei das Energiespeichersystem zum Bereitstellen einer Ausgangsspannung von über 1,5 kV konfiguriert ist, und wobei das Energiespeichersystem mehrere in Reihe geschaltete Energiespeichereinheiten (3) umfasst, wobei eine Energiespeichereinheit der mehreren Energiespeichereinheiten einen ersten Einheitsanschluss (6) und einen zweiten Einheitsanschluss (7) aufweist, wobei das Verfahren Folgendes umfasst:
Bereitstellen der Energiespeichereinheit mit einem Energiespeicherelement (8), das einen ersten Elementanschluss (9) und einen zweiten Elementanschluss (10) aufweist, und einer Schutzschaltung, die einen ersten pyrotechnischen Schalter (11) und einen zweiten pyrotechnischen Schalter (12) umfasst;
Verbinden des zweiten Elementanschlusses mit dem zweiten Einheitsanschluss;
Verbinden des ersten pyrotechnischen Schalters zwischen dem ersten Einheitsanschluss und dem ersten Elementanschluss;
Verbinden des zweiten pyrotechnischen Schalters zwischen dem ersten Einheitsanschluss und dem zweiten Einheitsanschluss;
wobei der erste pyrotechnische Schalter einen Primärzustand aufweist, in dem er geschlossen ist, und
wobei der zweite pyrotechnische Schalter einen Primärzustand aufweist, in dem er offen ist; und
Steuern des Schaltens des ersten und des zweiten pyrotechnischen Schalters, umfassend das Schalten des zweiten pyrotechnischen Schalters in einen Sekundärzustand, in dem er geschlossen ist, und nach einer einstellbaren Zeitverzögerung das Schalten des ersten Schalters in einen Sekundärzustand, in dem er geöffnet ist, oder umgekehrt.

## Revendications

1. Système de stockage d'énergie connectable à un réseau de distribution d'énergie, le système de stockage d'énergie (1) comprenant une pluralité d'unités de stockage d'énergie (3) connectées en série, une unité de stockage d'énergie de la pluralité d'unités de stockage d'énergie comprenant une première borne d'unité (6) et une deuxième borne d'unité (7), un élément de stockage d'énergie (8) présentant une première borne d'élément (9) et une deuxième borne d'élément (10), la deuxième borne d'élément étant connectée à la deuxième borne d'unité, et un circuit de protection comprenant un premier interrupteur pyrotechnique (11) connecté entre la première borne d'unité et la première borne d'élément et un deuxième interrupteur pyrotechnique (12) connecté entre la première borne d'unité et la deuxième borne d'unité, le système de stockage d'énergie étant configuré pour fournir une tension de sortie supérieure à 1,5 kV, le premier interrupteur pyrotechnique présentant un état primaire dans lequel il est fermé et un état secondaire dans lequel il est ouvert, le deuxième interrupteur pyrotechnique présentant un état primaire dans lequel il est ouvert et un état secondaire dans lequel il est fermé, l'unité de stockage d'énergie comprenant une unité de commande (14) connectée aux premier et deuxième interrupteurs pyrotechniques, l'unité de commande étant agencée pour commuter les premier et deuxième interrupteurs pyrotechniques des états primaires vers les états secondaires, et l'unité de commande étant agencée pour commander la commutation du deuxième interrupteur pyrotechnique vers un état secondaire dans lequel il est fermé et, après une temporisation réglable, la commutation du premier interrupteur vers un état secondaire dans lequel il est ouvert, ou inversement.

2. Système de stockage d'énergie selon la revendication 1, comprenant une pluralité de groupes de stockage d'énergie (2) connectés en parallèle, chaque groupe de stockage d'énergie comprenant une pluralité d'unités de stockage d'énergie (3) connectées en série.

3. Système de stockage d'énergie selon la revendication 1 ou 2, dans lequel le système de stockage d'énergie (1) est connecté à un convertisseur alternatif-continu (4) qui est, à son tour, connecté au réseau de distribution d'énergie (5).

4. Procédé de commande d'un système de stockage d'énergie (1) connectable à un réseau de distribution d'énergie (5), le système de stockage d'énergie étant configuré pour fournir une tension de sortie supérieure à 1,5 kV, et le système de stockage d'énergie comprenant une pluralité d'unités de stockage d'énergie (3) connectées en série, une unité de stockage d'énergie de la pluralité d'unités de stockage d'énergie présentant une première borne d'unité (6) et une deuxième borne d'unité (7), le procédé comprenant :
la fourniture à ladite unité de stockage d'énergie d'un élément de stockage d'énergie (8) présentant une première borne d'élément (9) et une deuxième borne d'élément (10), et d'un circuit de protection comprenant un premier interrupteur pyrotechnique (11) et un deuxième interrupteur pyrotechnique (12) ;
la connexion de la deuxième borne d'élément à la deuxième borne d'unité ;
la connexion du premier interrupteur pyrotechnique entre la première borne d'unité et la première borne d'élément ;
la connexion du deuxième interrupteur pyrotechnique entre la première borne d'unité et la deuxième borne d'unité ;
le premier interrupteur pyrotechnique présentant un état primaire dans lequel il est fermé, et
le deuxième interrupteur pyrotechnique présentant un état primaire dans lequel il est ouvert ; et
la commande de la commutation des premier et deuxième interrupteurs pyrotechniques, comprenant la commutation du deuxième interrupteur pyrotechnique vers un état secondaire dans lequel il est fermé et, après une temporisation réglable, la commutation du premier interrupteur vers un état secondaire dans lequel il est ouvert, ou inversement.
